# EUROPÄISCHE PATENTSCHRIFT

(11) **EP 0 619 432 B1**
(45) Veröffentlichungstag und Bekanntmachung des Hinweises auf die Patenterteilung: **09.10.1996**
(21) Anmeldenummer: 94890064.2
(22) Anmeldetag: 05.04.1994
(51) Int. Cl.: F04D 15/00, F04B 49/02, H02K 11/00, H02K 17/30

(54) **Anlage mit mindestens einer Flüssigkeitspumpe**
Installation with at least one pump for liquids
Installation avec au moins une pompe de liquide

(30) Priorität: 08.04.1993 AT 722/93
(43) Veröffentlichungstag der Anmeldung: 12.10.1994
(73) Patentinhaber: Pumpenfabrik Ernst Vogel Gesellschaft m.b.H., A-2000 Stockerau (AT)
(72) Erfinder: Sacher, Manfred Ing., A-1190 Wien (AT)
(74) Vertreter: Collin, Hans, Dipl.-Ing. Dr.

(56) Entgegenhaltungen:
- EP-A- 0 390 627
- DE-A- 3 720 360
- FR-A- 2 608 332
- GB-A- 2 199 081
- US-A- 5 221 189
- WORLD PUMPS, Nr.315, Dezember 1992, MORDEN GB Seiten 32 - 35 P. COSTELLO 'The Answer to pump surge control'

## Beschreibung

Die Erfindung betrifft Anlagen mit mindestens einer Flüssigkeitspumpe, insbesondere Wasserpumpe, vorzugsweise Kreiselpumpe, die von einem elektrischen Motor angetrieben wird, und mit einem mit dem Verbrauchernetz verbundenen elektrischen Druck-Grenzwertschalter, der sich bei Überschreiten eines oberen Grenzwerts des Verbraucherdrucks öffnet und bei Unterschreiten eines unteren Grenzwerts des Verbraucherdrucks schließt.

Bei derartigen Anlagen wird die Regelbarkeit der Pumpenleistung durch Variation der Pumpenantriebsdrehzahl üblicherweise dazu benützt, schwankende Verbrauchswerte bei konstantem Druck oder nach vorgegebenen Kriterien gleitenden Drücken abzudecken. Ebenso kann aber auch die Pumpwerksfördermenge bei beliebig schwankenden Förderdrücken konstant gehalten oder, z.B. bei Filteranlagen mit variablem Filterwiderstand, nach bestimmten Kriterien geführt werden.

Die erforderliche Drehzahl der Pumpen wird üblicherweise mittels P-(Proportional-), PI-(Proportional-Integral-) oder PID-(Proportional-Integral-Differential-)Reglern durch Vergleich eines gemessenen Ist-Wertes des Verbraucherdrucks mit einem vorgegebenen Soll-Wert des Verbraucherdrucks ermittelt und ein entsprechendes Signal (analoges Ausgangssignal) des Reglers dem Speisegerät des Pumpenmotors, z.B. ein Frequenzumformer bei Drehstromkurzschlußankermotoren oder ein Thyristerstromrichter bei Gleichstrommotoren oder ein Spannungsregelgerät zugeführt.

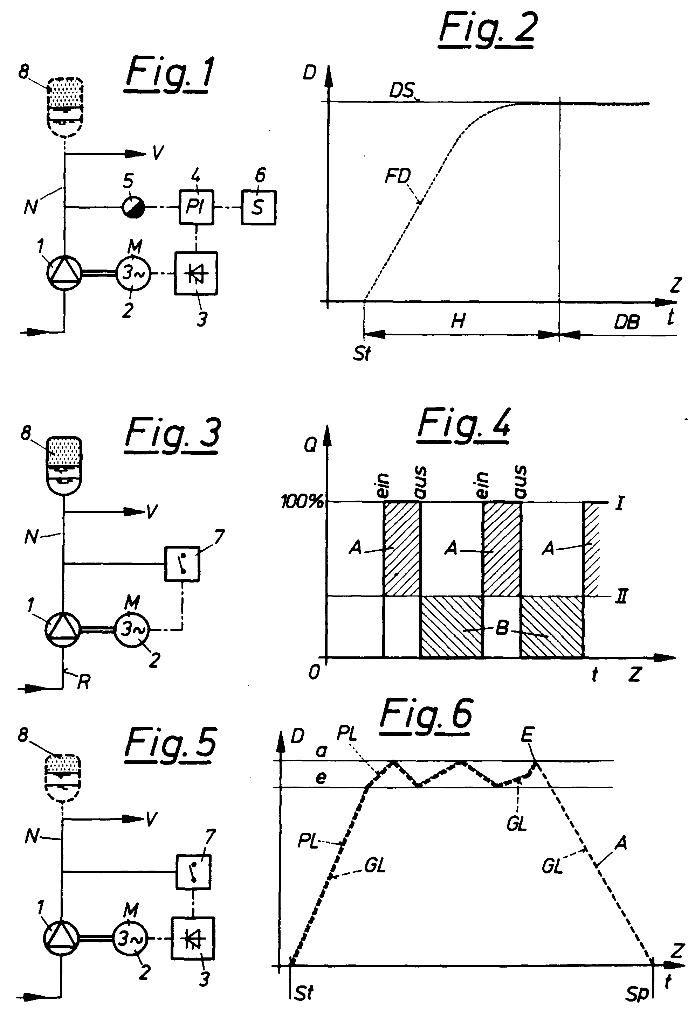

Eine bekannte Anlage der vorgeschilderten Art wird an Hand der Fig. 1 und 2 beispielsweise geschildert. Dabei zeigt Fig. 1 schematisch zwei Varianten einer solchen Anlage, Fig. 2 ein Druck-Zeit-Diagramm hierzu. Gemäß Fig. 1 wird die Pumpe 1, in diesem Fall eine Kreiselpumpe, durch den Elektromotor 2, hier ein Drehstromkurzschlußankermotor oder ein Gleichstrommotor, angetrieben. Auf den Motor 2 wirkt der Regler 3, ein Drehzahlregelgerät oder ein sonstiges Speisegerät, z.B. ein Frequenzumformer bei Drehstromkurzschlußankermotoren oder ein Thyristerstromrichter bei Gleichstrommotoren oder ein Spannungsregelgerät. Dieser Regler 3 empfängt das vorerwähnte Signal eines PI-Reglers 4, der dieses Signal auf Grund des Vergleiches der Werte des Druck-Istwert-Gebers 5 und des Druck-Sollwert-Gebers 6 ermittelt. Bei V sind die Verbraucher angeschlossen. Wie gestrichelt angedeutet, kann noch ein Speicherkessel 8 an das Verbrauchernetz N angeschlossen sein. Das Diagramm gemäß Fig. 2 veranschaulicht die Arbeitsweise dieser bekannten Regelung bzw. Anlage im Betrieb, wobei entlang der Abszisse die Zeit Z und entlang der Ordinate der Druck D aufgetragen sind. St ist der Startzeitpunkt, H läßt die Hochlaufzeit erkennen und DB verweist auf den Dauerbetrieb. Die Linie DS zeigt den Drucksollwert an. Die gestrichelte Linie FD gibt den Förderdruck der Pumpe bzw. dessen Verlauf oder Entwicklung im Betrieb dieser Anlage an, wobei dieser Förderdruck dem Druck im Versorgungsnetz N gleicht und eine Funktion der Drehzahl des Motors darstellt.

Diese Regelung bewirkt bei Verbrauchswerten von 0 bis 100 % einen kontinuierlichen Dauerbetrieb der Pumpe. Bei sehr kleinen Verbrauchswerten und besonders bei einer Verbrauchsmenge 0 arbeitet die Pumpe dieser bekannten Anlage dann unwirtschaftlich. Sie läuft z.B. beim Verbrauch 0 nur, um den Druck zu halten, ohne jedoch zu fördern. Das führt zu einer unerwünschten Erwärmung der Pumpe und zu einem unnötigen Energieverbrauch.

Darüber hinaus ist bei Errichtung einer solchen Anlage der Einsatz eines der vorgenannten P-, PI- oder PID-Regler notwendig, was besonders bei kleinen Anlaqen einen erheblichen Kostenanteil darstellt.

In der DE-A-37 20 360 ist ein Verfahren zur Steuerung des Arbeitspunktes von Pumpenmotoren beschrieben, bei dem zyklisch aprupt zwischen der Nenndrehzahl und einer Drehzahl knapp über Null hin und hergeschaltet wird. Die dabei entstehenden Druckstöße werden durch einen Druckausgleichsbehälter gedämpft.

In WORLD PUMPS (Nr. 315, Dezember 1992, Seiten 32-35, "The Answer to pump surge control", P. Costello) ist ebenfalls ein Verfahren zur Steuerung des Arbeitspunktes von Pumpenmotoren unter Einsatz eines Kennfeldreglers beschrieben.

Die FR-A-2 608 332 zeigt einen Motor mit aufgesetztem Frequenzumwandler. Der Erfindung liegt die Aufgabe zugrunde, die Verwendung dieser P, PI- oder PID-Regler zu vermeiden, also die Kosten dieser Geräte einzusparen und weiters den unwirtschaftlichen Betrieb der Pumpen bei gegen 0 gehenden Fördermengen zu unterbinden.

Diese Aufgabe wird erfindungsgemäß dadurch gelöst, , daß zwischen dem Ausgang des Druck-Grenzwertschalters und dem Antriebsmotor (2) ein Drehzahlregelgerät, insbesondere Frequenzumformer mit Hochlauf- und Tieflauframpe, zwischengeschaltet ist, womit bei geschlossenem Grenzwertschalter durch das Drehzahlregelgerät die Motordrehzahl und damit die Fördermenge bis zum Erreichen des oberen Druck-Grenzwerts (a) allmählich steigerbar ist und bei offenem Grenzwertschalter durch das Drehzahlregelgerät die Motordrehzahl und damit die Fördermenge bis zum Erreichen des unteren Druck-Grenzwerts allmählich bis zum Motorstillstand verringerbar ist. Man verzichtet also auf den Einsatz von P-, Pl- oder PID-Reglern. Somit wird das Drehzahlregelgerät nicht durch ein, insbesondere analoges, Ausgangssignal od.dgl. eines derartigen bekannten Reglers angesteuert, sondern durch den Steuerkontakt eines nomalen Zweipunktdruckreglers bzw. Druck-GrenzwertSchalters ein- bzw. ausgeschaltet.

Durch diesen Steuerkontakt wird das mit dem Motorspeisegerät verbundene Drehzahlregelgerät, z.B. ein Frequenzumformer, beim Unterschreiten des unteren Druckgrenzwertes im Versorgungsnetz gestartet und steigert die Drehzahl der Pumpe kontinuierlich gemäß seiner Hochlauframpe solange, bis durch die steigende Förderleistung der Pumpe der obere Druckgrenzwert (Ausschaltpunkt) im Versorgungsnetz erreicht wird. Nun öffnet der Steuerkontakt des Reglers und das Motorspeisegerät erhält den Abschaltbefehl und vermindert die Drehzahl der Pumpe wieder kontinuierlich entsprechend seiner Ablauframpe. Dies geschieht solange, bis dadurch der Druck in der Anlage bzw. im Versorgungsnetz wieder bis zum unteren eingestellten Grenzwert absinkt und das Motorspeisegerät wieder startet. Dieser beschriebene Vorgang wiederholt sich andauernd.

Die Verwendung von Druck-Grenzwert-Schaltern in Verbindung mit dem Elektroantrieb von Flüssigkeitspumpen ist an sich bekannt. Hiebei wird jedoch im Gegensatz zur Erfindung nicht das Drehzahlregelgerät, sondern unmittelbar der Pumpenantriebsmotor ausgeschaltet.

Eine solche vorbekannte Anlage wird an Hand der Fig. 3 und 4 erläutert, wobei die Fig. 3 schematisch die Anlage, die Fig. 4 ein zugehöriges Zeit-Mengen-Diagramm veranschaulicht.

Die Förderleistung der Pumpanlage wird hier dadurch schwankenden Verbrauchswerten angepaßt, daß die Pumpe 1 im intermittierenden Betrieb arbeitet. Dazu ist erforderlich, daß am Verbrauchernetz N ein Speicherkessel 8, nämlich ein Druckwindkessel mit ausreichendem Volumen angeschlossen ist. Dieser Kessel ist zum Großteil mit Luft oder Gas gefüllt und kann während des Laufes der Pumpe 1 jenen Teil der Pumpenfördermenge aufnehmen, der momentan nicht verbraucht wird. Dadurch wird die Luft im Kessel 8 komprimiert und der Druck steigt. Sobald im Kessel der vorgegebene maximale Druck, d.h. der Ausschaltdruck, erreicht ist, wird der Antriebsmotor 2 und damit die Pumpe durch den am Kessel oder an der Verbraucherleitung bzw. an das Verbrauchernetz N, an dem die Verbraucher V hängen, angeschlossenen Zweipunktdruckregler bzw. Druckschalter 7 ausgeschaltet.

Da demzufolge die Förderung der Pumpe 1 sofort aufhört, wird das Wasser von der komprimierten Luft wieder aus dem Kessel 8 in die Verbraucherleitung bzw. in das Netz N gedrückt, um den weiterbestehenden Verbrauch zu decken. Dadurch sinkt der Druck im Kessel 8. Bei Erreichen des vorgewählten Mindestdruckes, d.h. des Einschaltdrucks, wird die Pumpe wieder eingeschaltet. Sie liefert sofort wieder ihre volle Fördermenge, die wieder zum Teil in die Verbraucherleitung und zum Teil in den Kessel fließt. Der vorbeschriebene Vorgang wiederholt sich andauernd. Dies veranschaulicht insbesondere das Diagramm in Fig. 4, in dem längs der Abszisse die Zeit t, längs der Ordinate die Fördermenge der Pumpe Q aufgetragen wurde. Die obere horizontale Linie I zeigt die Pumpenfördermenge bei voller Drehzahl (100 %), die weiter unten befindliche Linie II eine momentane Verbrauchsmenge. Die oberen schraffierten Felder A veranschaulichen die jeweils vom Kessel 8 aufgenommene Menge bei Pumpenlauf, die in der anderen Richtung schraffierten Felder B die vom Kessel 8 abgegebene Menge beim Pumpenstillstand. Mit "ein" und "aus" sind noch die Zeitpunkte des Ein- und Ausschaltens der Pumpe angedeutet.

Diese vorbekannte Steuerungsart hat folgende Nachteile:
1. Das Volumen des Druckkessels 8 muß relativ groß sein, um die Schalthäufigkeit der Pumpe 1 bzw. ihres Antriebsmotors 2 zu begrenzen.
2. Es ergibt sich eine starke mechanische Beanspruchung der Pumpe 1 und des Antriebsmotors 2 durch andauerndes bzw. wiederholtes Anlaufen auf volle Drehzahl und wieder Stillsetzen der Maschine.
3. Außerdem resultiert ein dauerndes Schwanken des Druckes in der Verbraucherleitung zwischen Aus- und Einschaltdruck, wobei die Differenz zwischen diesen beiden Drücken ca. 20 bis 25 % des Ausschaltdruckes beträgt, da sonst die Schalthäufigkeit der Pumpe 1 groß sein würde bzw. müßte.
4. Bei Verwendung der Pumpe 1 als Druckerhöhungsanlage wird aus dem zulaufseitigen Rohrnetz R kurzzeitig und schlagartig beim Anlauf der Pumpe 1 immer die volle Pumpenfördermenge entnommen, obwohl die Verbrauchsmenge in der Verbraucherleitung N unter Umständen wesentlich geringer und kontinuierlicher ist. Das bedeutet unerwünschte Druckstöße im zulaufseitigen Rohrnetz R, aus dem die Pumpe 1 das Wasser bzw. die sonstige Flüssigkeit entnimmt.

Bei der erfindungsgemäßen Steuerung wird demgegenüber - wie erwähnt - von dem Zweipunktdruckregler nicht der Pumpenantriebsmotor aus- und eingeschaltet, sondern ein Drehzahlregelgerät, das beim Einschalten die Drehzahl des Motors langsam steigert und beim Ausschalten diese Drehzahl wieder langsam verringert. Mit der Drehzahl der Pumpe wird auch die Fördermenge der Pumpe variiert. Durch die relativ langsame Änderung der Pumpendrehzahl und somit der Pumpenfördermenge beim Ein- und Ausschalten schwankt die Fördermenge der Pumpe nicht schlagartig zwischen 0 und 100 % wie bei der bekannten Steuerungsart, sondern nur in wesentlich geringerem Ausmaß. Es kann dadurch das Speichervolumen des Druckkessels wesentlich verringert werden oder bei ausreichend großem Versorgungsnetz gänzlich entfallen. Die Differenz zwischen dem Ein- und Ausschaltdruck kann außerdem sehr gering gehalten werden, z.B. mit ca. 3-5 % des Druckes in der Verbraucherleitung, zumal bei Verwendung eines elektronischen Zweipunktdruckreglers die Schalthäufigkeit sehr hoch sein kann, ohne daß die Pumpe, der Motor, das Regelgerät oder der Zweipunktdruckregler unzulässig beansprucht werden.

Eine Ausgestaltung der Erfindung ist dadurch gekennzeichnet, daß bei Verwendung elektronischer Zweipunkt-Druckregler bzw. elektronischer Schwellwert -Schalter zwischen dem Verbrauchernetz N und dem elektronischen Zweipunkt-Druckregler bzw. dem elektronischen Schwellwert-Schalter 7 ein Meßumformer 9 zur Transformierung des Drucks in eine elektrische Größe, beispielsweise elektrischer Strom oder Spannung zwischengeschaltet ist. Solche Meßumformer sind preisgünstig und von vielen Anbietern im Handel erhältlich, wobei verschiedene genormte elektrische Ausgangssignale zur Verfügung stehen, z.B. die sogenannte 20 mA-Schnittstelle mit einem Strombereich von 4 bis 20 mA oder Spannungsausgänge mit 0-10 V bzw. -10 bis +10 V. Wahlweise stehen auch, z.B. über Optokoppler, galvanisch getrennte Ausgänge zur Verfügung. Der Meßumformer ist direkt im Verbrauchernetz angeordnet und galvanisch, z.B. mittels Zweidrahtleitung, oder galvanisch getrennt, z.B. mittels Optokoppler, mit dem elektronischen Zweipunkt-Druckregler bzw. dem elektronischen Schwellwert-Schalter verbunden. Durch die Zwischenschaltung des Meßumformers kann der elektronische Schwellwertschalter bzw. Zweipunkt-Druckregler räumlich getrennt vom Verbrauchernetz angeordnet werden. So ist es beispielsweise möglich, den Schwellwertschalter gemeinsam mit dem Drehzahlregelgerät in einem Gehäuse unterzubringen, das auch spritz- oder strahlwasserfest ausgeführt sein kann.

Gemäß der weiteren Ausgestaltung der Erfindung ist bei Vorhandensein von zwei oder mehr Pumpen für jede einzelne Pumpe ein getrenntes Drehzahlregelgerät vorgesehen, das mit dem Verbrauchernetz über einen getrennten Zweipunktdruckregler bzw. Druck-Grenzwert-Schalter in Verbindung steht.

Für die räumliche Unterbringung der Anlage und für einen ökonomischen Betrieb kann es günstig sein, wenn gemäß der Erfindung das Drehzahlregelgerät direkt am, insbesondere auf dem, Antriebsmotor der Pumpe montiert ist, wobei vorzugsweise der Kühlluftstrom des Motors auch der Kühlung des Drehzahlregelgeräts dient.

Dabei ist es zweckmäßig, daß das Drehzahlregelgerät und insbesondere der Zweipunktdruckregler bzw. der Schwellwertschalter in ein Gehäuse eingebaut ist bzw. sind, das vorzugsweise aus einem Kühlkörper und einer Gehäusekappe besteht, und daß dieses Gehäuse, vorzugsweise dieser Kühlkörper, im Kühlluftstrom des Motors angeordnet ist. Da bei steigender Motordrehzahl einerseits der Leistungsbedarf der Pumpe, die Stromaufnahme des Motors und damit die Abwärmeerzeugung des Regelgerätes steigt und andererseits sich auch die Intensität des Kühlluftstromes des Motorlüfters erhöht, ergibt sich eine bedarfsgerechte Kühlung des Regelgerätes.

Besonders vorteilhaft ist es, wenn der Kühlkörper des Gehäuses für das Drehzahlregelgerät Kühlrippen aufweist, durch die beim Betrieb der Anlage der Kühlluftstrom des Motors hindurchgelenkt wird. Dadurch vervielfacht sich gegenüber einer Kühlplatte die Kühlwirkung des Kühlkörpers und außerdem bilden die Kühlrippen Kanäle für den Luftstrom, wodurch der Luftstrom gezielt durch die Kühlrippen hindurch auf den Motorlüfter gelenkt werden kann. Dafür ist es zweckmäßig, daß der Kühlkörper des Gehäuses für das Drehzahlregelgerät unmittelbar über einem mit der Pumpenmotorantriebswelle verbundenen Lüfterrad angeordnet ist. Neben der kompakten Bauweise und den beschriebenen strömungstechnischen Eigenschaften wird dadurch auch das elektrische Verhalten des Regelgerätes nachhaltig verbessert. Moderne Regelgeräte (Frequenzumformer) arbeiten bei der Erzeugung des Drehstromes für die Motorspeisung mit relativ hohen Schaltfrequenzen (bis ca. 14 kHz). Bei getrennter Anordnung von Frequenzumformer und Pumpe ergeben sich lange Verbindungskabel zwischen diesen Geräten, wodurch es oft zu unerwünschten Funkstörungen durch die Antennenwirkung dieser Kabel kommt. Dieser negative Effekt wird durch den direkten Aufbau des Frequenzumformers auf den Motor weitgehend vermieden, da die Verbindungskabellänge dabei von etlichen Metern auf wenige Zentimeter verringert wird. Die Lieferung der Pumpe samt Antriebsmotor und Regelgerät als eine kompakte, in sich verkabelte betriebsbereite Einheit vermindert außerdem wesentlich die Installationskosten, u.a. durch Entfall eines Schalt- und Regelschrankes mit Kühlgebläse für das Regelgerät.

Zweckmäßigerweise ist das Gehäuse für das Drehzahlregelgerät im zusammengebauten Zustand zumindest spritzwasserfest. Dies ermöglicht den Einsatz der Einheit Pumpe - Regelgerät in Feuchträumen.

Weiters ist es günstig, wenn der Leistungsteil mit hoher Verlustwärme des Drehzahlregelgerätes direkt auf dem Kühlkörper angeordnet ist und die, nur geringe Verlustwärme abgebende, Steuerelektronik auf zumindest einer, vom Kühlkörper beabstandeten, Platine im Gehäuse angeordnet ist. Durch die Anbringung des Leistungsteils direkt am Kühlkörper werden die thermisch am meisten beanspruchten Komponenten wie Leistungstransistoren etc. optimal von der den Kühlkörper anströmenden Kaltluft gekühlt. Die wärmeempfindlichen Bauteile der Steuerungselektronik, die selbst nur geringe Verlustleistung aufweisen, können dadurch vom Leistungsteil beabstandet untergebracht werden. Durch das Schichten mehrerer Platinen übereinander erhält man eine große Platinengesamtfläche, auf der aufwendige Schaltungen, z.B. mikroprozessorgestützte Eingabe/Ausgabeschaltungen vorgesehen werden können.

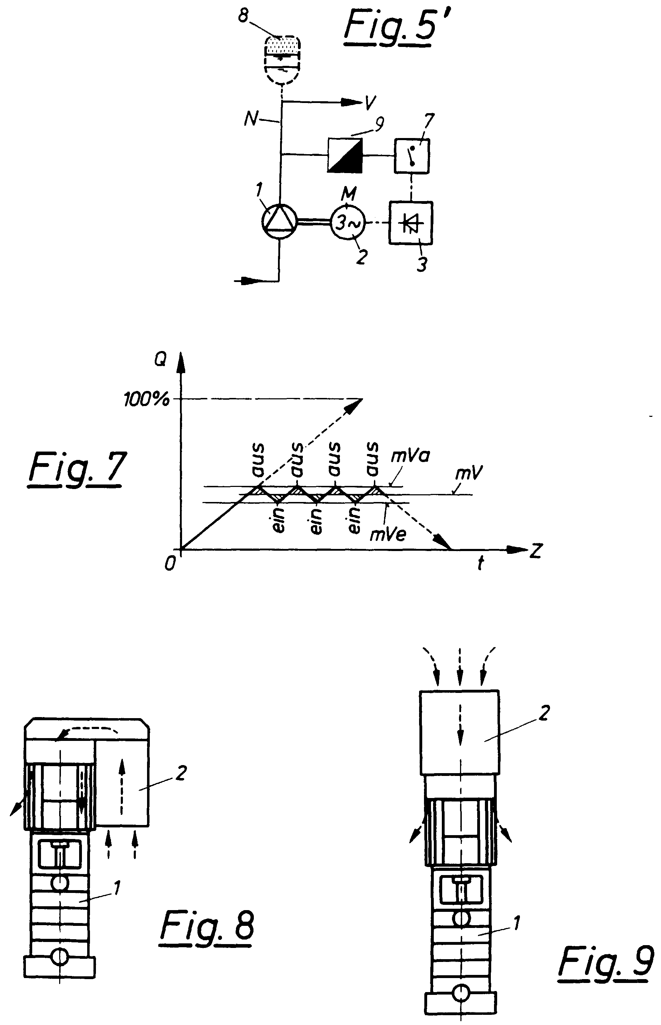

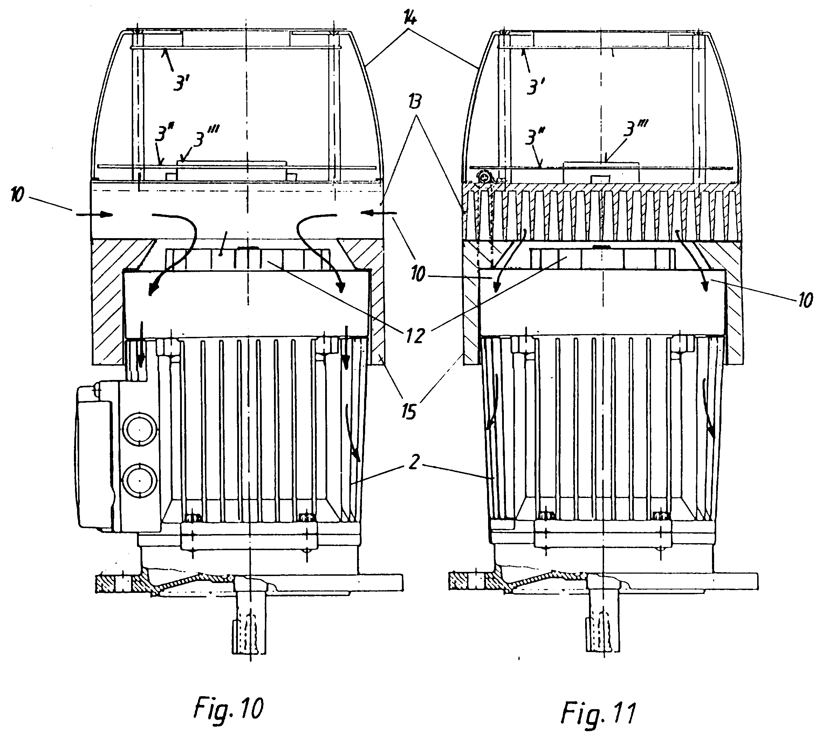

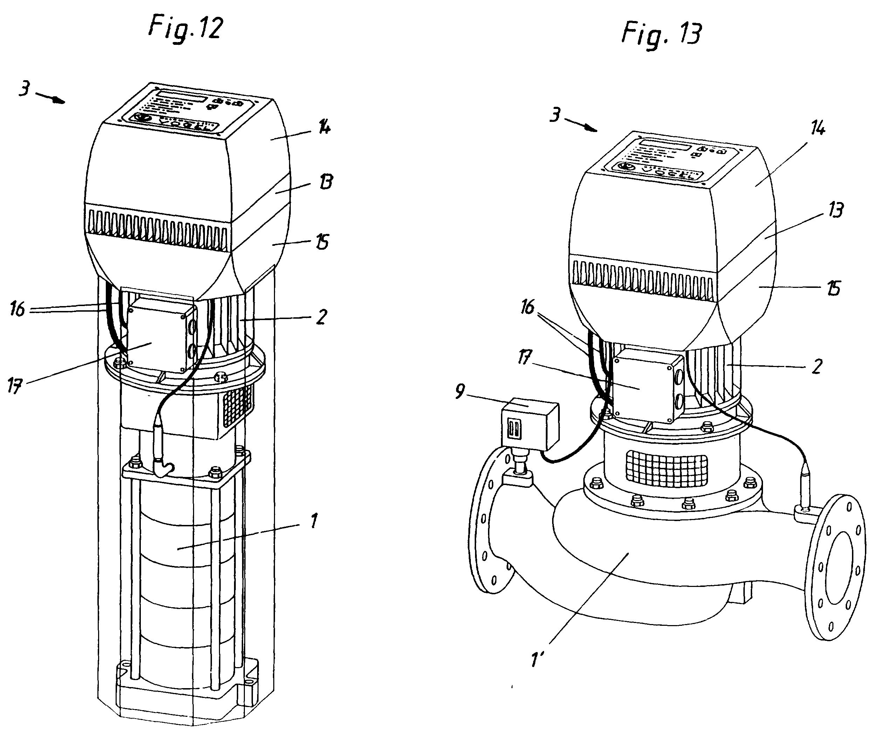

Die Erfindung wird im folgenden an Hand der Fig. 5-13 beispielsweise erläutert. Fig. 5 und 5' zeigen zwei Varianten einer erfindungsgemäßen Anlage, die Fig. 6 ein zugehöriges Druck-Zeit-Diagramm und die Fig. 7 ein Mengen-Zeit-Diagramm dazu. In Fig. 5 und 5' werden entsprechende Teile mit den gleichen Bezugszeichen wie oben bezeichnet. Der nach obigen Ausführungen nur fallweise vorgesehene Speicherkessel 8 ist demgemäß gestrichelt angedeutet und ist im gegebenen Fall kleiner im Volumen gehalten als der Speicherkessel gemäß der bekannten Ausbildung nach Fig. 3. Die Fig. 8 und 9 zeigen weitere Ausgestaltungen der Erfindung in Seitenansicht, die Fig. 10 und 11 um 90° gegeneinander verdrehte Längsschnitte durch eine erfindungsgemäße Anlage und die Fig. 12 und 13 perspektivische Ansichten von Pumpenanlagen, bei denen das Regelungsgehäuse direkt auf den Pumpenmotor aufgesetzt ist.

Wie oben bereits erwähnt, wird bei der erfindungsgemäßen Anlage von dem Zweipunktdruckregler bzw. Zweipunktdruckschalter 7 das Drehzahlregelgerät 3 ein- und ausgeschaltet. Der Regler bzw. Schalter 7 verläßt in bekannter Art mit Verzögerung seinen jeweiligen Schaltkontakt bzw. seine jeweilige Schalt-Endposition, um aber nach einem solchen Öffnen abrupt seine andere Schalt-Endposition einzunehmen. Das Drehzahlregelgerät 3 steigert beim Einschalten die Drehzahl des Elektromotors 2, hier ein Drehstromkurzschlußankermotor oder ein Gleichstrommotor, langsam und verringert jene beim Ausschalten des Drehzahlregelgeräts 3 wieder langsam. Mit der Drehzahl des Motors 2 und damit mit der Drehzahl der von jenem angetriebenen Pumpe 1 wird auch die Fördermenge Q (Fig. 7) variiert. Im Diagramm nach Fig. 7 ist wieder entlang der Abszissenachse die Zeit Z bzw. t, längs der Ordinatenachse die Fördermenge Q der Pumpe ersichtlich gemacht. Mit 100 % ist die Pumpenfördermenge bei voller Drehzahl, mit der Linie mV die momentane Verbrauchsmenge, mit der Linie mVe die Fördermenge der Pumpe bzw. die Verbrauchsmenge beim Einschalten ("ein"-Stellungen), mit der Linie mVa beim Ausschalten ("aus"-Stellungen) angedeutet. Das zugehörige Druck-Zeit-Diagramm läßt Fig. 6 erkennen, wobei längs der Abszisse wieder die Zeit Z bzw. t aufgetragen ist u.zw. die Startzeit St und die Stopzeit Sp der Pumpe und längs der Ordinate der Druck D, nämlich der Förderdruck der Pumpe bzw. der Druck im Verbrauchernetz ersichtlich gemacht ist. Die Linie e (unterer Grenzwert) macht die Einschaltzeitpunkte, die Linie a (oberer Grenzwert) die Ausschaltzeitpunkte ersichtlich. Das Verbrauchsende ist mit E angedeutet. Die gestrichelte Linie GL macht den jeweiligen Förderdruck der Pumpe 1 als Funktion der Drehzahl, die punktierte Linie PL den Druck im Versorgungsnetz N sichtbar.

Ein weiteres Merkmal der Erfindung besteht darin, daß, wie oben beschrieben, für die Regelung der Pumpe 1 nicht ein bestimmter Fix- oder gleitender Sollwert des Förderdrucks der Pumpe (DS in Fig. 2) vorgegeben wird, sondern ein oberer Grenzwert a und ein unterer Grenzwert b. Das führt dazu, daß die Pumpe 1, sobald der Verbrauch gegen 0 geht, stehen bleibt und nicht im unwirtschaftlichen Betrieb weiterläuft, nur um den Druck zu halten. Das Stillsetzen der Pumpe erfolgt erfindungsgemäß deshalb, weil nach Öffnen des Reglerkontaktes beim höheren Grenzwert, sobald kein Verbrauch vorliegt, dieser höhere Druck im Netz N bestehen bleibt und der Pumpenantriebsmotor 2 auf Grund des geöffneten Reglerkontaktes gemäß der Ablauframpe A (Fig. 6!) des Drehzahlregelgerätes 3 in seiner Drehzahl bis zum Stillstand verringert wird. Es handelt sich um ein im wesentlichen geschlossenes Netzsystem; es kann bei Verlusten von 1 bis 2 % noch als geschlossen angesehen werden. Erst bei Einsetzen eines neuerlichen Verbrauches sinkt der Anlagedruck (Druck im Netz N) wieder ab und die Pumpe 1 wird bei Erreichen des unteren Druckgrenzwertes a neuerlich gestartet.

Eine weitere Ausbildung der Erfindung besteht darin, daß der Befehl für Start und Stop (Hochregeln und Abregeln) des Drehzahlregelgerätes 3 nicht mittels eines mechanischen Druckreglers, sondern durch einen oder mehrere elektronische Schwellwertschalter erteilt wird. Diese elektronischen Schalter haben keine mechanisch bewegten Teile und unterliegen somit keinem Verschleiß. Sie ermöglichen dadurch eine hohe Schalthäufigkeit, da auch die Weiterverarbeitung der Steuerbefehle im Regelgerät 3 rein elektronisch erfolgt und somit ebenfalls keinem Verschleiß unterliegt. Durch relativ kurze Zeiten für den Hoch- und Abregelvorgang des Drehzahlregelgerätes 3 wird die genannte hohe Schalthäufigkeit erreicht und dadurch wiederum werden unzulässige Druckeinbrüche beim Wiedereinschalten der einmal stillgesetzten Pumpe 1 durch einen einsetzenden Verbrauch vermieden. Fig. 5' zeigt eine solche Ausgestaltung der Anlage mit elektronischem Schwellwertschalter. Dabei ist zwischen dem Verbrauchernetz N und dem elektronischen Schwellwert-Schalter 7 ein Meßumformer 9 zur Transformierung des Druckes in eine elektrische Größe zwischengeschaltet. Dabei kann jeder handelsübliche Druck/Strom- oder Druck/Spannungs-Meßumformer verwendet werden. In Industrieanlagen besonders vorteilhaft einsetzbar sind Meßumformer mit galvanisch getrennten Ausgängen. Durch eine galvanisch getrennte Verbindung, über Optokoppler o.ä., des Meßumformers mit dem Schwellwertschalter können durch Potentialverschiebungen bedingte Masseströme, die zur Verfälschung der Regelung führen können, vermieden werden.

Bei Anwendung der erfindungsgemäßen Steuerung wird zweckmäßigerweise bei Anlagen mit mehreren Pumpen jeder Maschine ein Regelgerät (Frequenzumformer) zugeordnet. Gemäß den Fig. 8 und 9 kann in einer weiteren Ausgestaltung der Erfindung dieses Regelgerät direkt am bzw. auf dem Pumpenantriebsmotor montiert werden. Durch diese Bauweise kann eine zwangsweise Kühlluftführung im Regelgerät durch das Motorlüfterrad erzielt werden. Im folgenden werden nun Ausführunqen der Erfindung erläutert, bei denen das Drehzahlregelgerät in ein mit Kühlkörper versehenes Gehäuse eingebaut und dieses Gehäuse direkt auf den Pumpenmotor aufgesetzt ist.

In den Fig. 10 und 11 sind rechtwinkelig zueinander geführte Schnitte durch das Gehäuse des Drehzahlregelgerätes zu sehen. Dieses Gehäuse besteht aus einem Kühlkörper 13, auf dem direkt der Leistungsteil 3''' des Regelgeräts angebracht ist. Zur besseren Wärmeleitung zwischen Leistungsteil und Kühlkörper dient eine dazwischen aufgetragene Wärmeleitpaste. Diese Seite des Kühlkörpers wird von einer Abdeckkappe 14 verschlossen, wobei die Verbindung zwischen Kühlkörper und Abdeckkappe im allgemeinen spritzwasserdicht ausgeführt ist. Die Gehäusekappe 14 nimmt weiters Platinen 3',3'' mit der Steuerelektronik des Drehzahlregelgeräts (Frequenzumformers) auf. Auf der dem Motorlüfter 12 zugewandten Seite des Kühlkörpers sind Kühlrippen vorgesehen, an die ein weiterer Teil 15 des Reglergehäuses anschließt, der zur formschlüssigen Verbindung, beispielsweise durch Aufstecken, mit dem Motor 2 vorgesehen ist. Im Betrieb saugt das Lüfterrad 12 durch die von den Kühlrippen gebildeten Strömungskanäle Frischluft an und bläst sie über und durch den Motor, wobei gleichzeitig auch der Kühlkörper gekühlt wird. Die Lenkung des Luftstroms erfolgt gemäß den Pfeilen 10.

Die Figuren 12 und 13 zeigen in der Perspektive Einheiten, bestehend aus einer einstufigen (Fig. 13) bzw. mehrstufigen (Fig. 12) Pumpe 1,1', die von einem Motor 2 angetrieben wird, auf den ein in ein Gehäuse, bestehend aus einer Abdeckkappe 14, einem Kühlkörper 13 und einem Aufsteckteil 15, eingebautes Drehzahlregelgerät 3 (Frequenzumformer) direkt aufgesetzt ist. Die Ausgangskabel 16 des Frequenzumformers sind unmittelbar zum Anschlußkasten 17 des Motors geführt, so daß man mit einer Kabellänge von wenigen Zentimetern das Auslangen findet. In Fig. 13 ist weiters ein Meßumformer 9 zu sehen, der zusammen mit einem elektronischen Schwellwertschalter den Zweipunktdruckregler bildet.

## Patentansprüche

1. Anlage mit mindestens einer Flüssigkeitspumpe, insbesondere Wasserpumpe, vorzugsweise Kreiselpumpe, die von einem elektrischen Motor angetrieben wird, und mit einem mit dem Verbrauchernetz (N) verbundenen elektrischen Druck-Grenzwertschalter (7), der sich bei Überschreiten eines oberen Grenzwerts (a) des Verbraucherdrucks öffnet und bei Unterschreiten eines unteren Grenzwerts (e) des Verbraucherdrucks schließt, dadurch gekennzeichnet, daß zwischen dem Ausgang des Druck-Grenzwertschalters (7) und dem Antriebsmotor (2) ein Drehzahlregelgerät (3), insbesondere Frequenzumformer mit Hochlauf- und Tieflauframpe (Fig. 6, 7), zwischengeschaltet ist, womit bei geschlossenem Grenzwertschalter (7) durch das Drehzahlregelgerät (3) die Motordrehzahl und damit die Fördermenge (Q) bis zum Erreichen des oberen Druck-Grenzwerts (a) Kontinuierlich steigerbar ist und bei offenem Grenzwertschalter (7) durch das Drehzahlregelgerät die Motordrehzahl und damit die Fördermenge bis zum Erreichen des unteren Druck-Grenzwerts (e) Kontinuierlich bis zum Motorstillstand verringerbar ist.

2. Anlage nach Anspruch 1, dadurch gekennzeichnet, daß zwischen dem Verbrauchernetz (N) und dem elektronischen Zweipunkt-Druckregler bzw. dem elektronischen Schwellwert-Schalter (7) ein Meßumformer (9) zur Transformierung des Drucks in eine elektrische Größe, beispielsweise elektrischer Strom oder Spannung zwischengeschaltet ist.

3. Anlage nach Anspruch 2, dadurch gekennzeichnet, daß der Meßumformer (9) und der elektronische Zweipunkt-Druckregler bzw. Schwellwert-Schalter (7) galvanisch getrennt, insbesondere mittels Optokoppler, miteinander verbunden sind.

4. Anlage nach einem der Ansprüche 1 bis 3, dadurch gekennzeichnet, daß bei Vorhandensein von zwei oder mehr Pumpen für jede einzelne Pumpe ein getrenntes Drehzahlregelgerät vorgesehen ist, das mit dem Verbraucherüber einen getrennten Zweipunktdruckregler bzw. Druck-Grenzwert-Schalter in Verbindung steht.

5. Anlage nach einem der Ansprüche 1 bis 4, dadurch gekennzeichnet, daß das die Drehzahl des Pumpenantriebsmotors beim Ein- und Ausschalten kontinuierlich vom Stillstand zu einem oberen Grenzwert bzw. zum Stillstand bzw. zwischen einem unteren und einem oberen Grenzwert hoch- und abregelnde Drehzahlregelgerät unmittelbar am Antriebsmotor der Pumpe, insbesondere im Kühlluftstrom des Motors, montiert ist.

6. Anlage nach Anspruch 5, dadurch gekennzeichnet, daß das Drehzahlregelgerät und insbesondere der Zweipunktdruckregler bzw. der Schwellwertschalter in ein Gehäuse eingebaut ist bzw. sind, das vorzugsweise aus einem Kühlkörper und einer Gehäusekappe besteht, und daß dieses Gehäuse, vorzugsweise dieser Kühlkörper, im Kühlluftstrom des Motors angeordnet ist.

7. Anlage nach Anspruch 6, dadurch gekennzeichnet, daß der Kühlkörper des Gehäuses für das Drehzahlregelgerät Kühlrippen aufweist, durch die beim Betrieb der Anlage der Kühlluftstrom des Motors hindurchgelenkt wird.

8. Anlage nach Anspruch 6 oder 7, dadurch gekennzeichnet, daß der Kühlkörper des Gehäuses für das Drehzahlregelgerät unmittelbar über einem mit der Pumpenmotorantriebswelle verbundenen Lüfterrad angeordnet ist.

9. Anlage nach einem der Ansprüche 6 bis 8, dadurch gekennzeichnet, daß das Gehäuse für das Drehzahlregelgerät im zusammengebauten Zustand zumindest spritzwasserfest ist.

10. Anlage nach einem der Ansprüche 6 bis 9, dadurch gekennzeichnet, daß der Leistungsteil (3''') mit hoher Verlustwärme des Drehzahlregelgeräts direkt auf dem Kühlkörper angeordnet ist und die, nur geringe Verlustwärme abgebende, Steuerelektronik auf zumindest einer, vom Kühlkörper beabstandeten, Platine (3',3'') im Gehäuse angeordnet ist.

## Claims

1. An installation having at least one liquid pump, in particular water pump, preferably rotatory pump, which is driven by an electric motor, and an electric pressure limit switch (7) connected to the water supply network (N), which switch opens when an upper limit (a) of the pressure on the consumer side is exceeded and closes when the pressure on the consumer side falls short of a lower limit (e), characterized in that a speed controlling device (3), in particular a frequency converter having high-run and low-run ramps (figs. 6, 7) is connected in series between the output of the pressure limit switch (7) and the driving motor (2), which is how the motor speed and thus the pump capacity (Q) may be continuously increased by way of speed controlling device (3) till the upper pressure limit (a) has been reached when limit switch (7) is closed, and the motor speed and thus the pump capacity may be continuously reduced to standstill of the motor by way of speed controlling device (3) till the lower pressure limit (e) has been reached when limit switch (7) is open.

2. The installation according to claim 1, characterized in that a transducer (9) for converting pressure into an electric variable, for instance electric current or voltage, is connected in series between the supply network (N) and the electronic two-point pressure controller or electronic threshold switch (7).

3. The installation according to claim 2, characterized in that the transducer (9) and the electronic two-point pressure controller or threshold switch (7) are connected in such a way that they are electrically isolated from each other, in particular by means of an optoelectronic coupler.

4. The installation according to any of claims 1 to 3, characterized in that, when two or several pumps are present, a separate speed controlling device is provided for each of them, which is connected to the supply network by way of a separate two-point pressure controller or pressure limit switch.

5. The installation according to any of claims 1 to 4, characterized in that the speed controlling device, which, on switching-on and switching-off, continuously increases and decreases the speed of the motor driving the pump from standstill to the upper limit and/or to standstill and/or between a lower and an upper limit, is mounted directly on the motor driving the pump, in particular in the cooling airflow of the motor.

6. The installation according to claim 5, characterized in that the speed controlling device and in particular the two-point pressure controller and threshold switch, respectively, is/are mounted in a casing which preferably consists of a heat sink and a casing cap, and in that this casing, preferably this heat sink, is arranged in the cooling airflow of the motor.

7. The installation according to claim 6, characterized in that the heat sink of the casing of the speed controlling device is provided with cooling ribs through which the cooling airflow of the motor is directed during operation of the installation.

8. The installation according to claim 6 or 7, characterized in that the heat sink of the casing of the speed controlling device is arranged directly above a fan wheel connected to the drive shaft of the pump motor.

9. The installation according to any of claims 6 to 8, characterized in that the casing of the speed controlling device is at least splash-proof when assembled.

10. The installation according to any of claims 6 to 9, characterized in that the power circuit (3"') with high heat loss of the speed controlling device is arranged directly on the heat sink and the electronic control circuit emitting only little heat is arranged on at least one printed circuit board (3', 3") in the casing, spaced from the heat sink.

## Revendications

1. Une installation avec au moins une pompe à liquide, en particulier pompe à eau, préférablement pompe centrifuge, actionnée par un électromoteur, et avec un interrupteur électrique à pression limite (7) relié avec le réseau d'alimentation d'eau (N), interrupteur qui s'ouvre quand une limite supérieure (a) de la pression au côté consommateur est dépassée et se ferme quand une limite inférieure (e) de la pression au côté consommateuer est dépassée, caractérisée en ce qu'un régulateur de vitesse (3), en particulier un convertisseur de fréquences avec rampe d'accélération et de décélération (fig. 6, 7) est intercalé entre la sortie de l'interrupteur électrique à pression limite (7) et le moteur de commande, de sorte que la vitesse du moteur et ainsi le refoulement (Q) peut être élevé continuellement par le régulateur de vitesse (3) jusqu'à-ce que la limite supérieure (a) de la pression soit atteinte quand l'interrupteur à pression limite (7) est fermé et la vitesse du moteur et ainsi le refoulement peut être reduit continuellement à l'arrêt du moteur par le régulateur de vitesse jusqu'à ce que la limite inférieure (e) soit atteint quand l'interrupteur à pression limite (7) est ouvert.

2. L'installation selon la revendication 1, caractérisée en ce qu'un transducteur (9) pour transformer la pression en une variable électrique, par exemple courant électrique ou tension, est intercalé entre le réseau d'alimentation d'eau (N) et le régulateur de pression à deux positions respectivement l'interrupteur électronique à valeur seuil.

3. L'installation selon la revendication 2, caractérisée en ce que le transducteur (9) et le régulateur de pression à deux positions respectivement interrupteur électronique à valeur seuil sont reliés l'un à l'autre de sorte qu'ils sont isolés électriquement, en particulier par un optocoupleur.

4. L'installation selon l'une des revendications 1 à 3, caractérisée en ce qu'un régulateur de vitesse séparé, rélié avec le réseau d'alimentation par un régulateur de pression à deux positions respectivement interrupteur à pression limite, est prévu pour chaque pompe individuelle si deux pompes ou plus sont présents.

5. L'installation selon l'une des revendications 1 à 4, caractérisée en ce que le régulateur de vitesse réglant vers le haut et vers le bas la vitesse de rotation du moteur de commande de pompe continuellement du point d'arrêt à une limite supérieure et/ou au point d'arrêt et/ou entre une limite inférieure et une limite supérieure au moment de connectant et de déconnectant est monté directement au moteur de commande de la pompe, en particulier dans le courant d'air de refroidissement du moteur.

6. L'installation selon la revendication 5, caractérisée en ce que le régulateur de vitesse et en particulier le régulateur de pression à deux positions respectivement l'interrupteur à valeur seuil est ou sont installé(s) dans une caisse se composant de préférence d'un refroidisseur et d'un capuchon decaisse, et en ce que cette caisse, préférablement ce refroidisseur, est arrangé dans le courant d'air de refroidissement du moteur.

7. L'installation selon la revendication 6, caractérisée en ce que le refroidisseur de la caisse pour le régulateur de vitesse comprend des ailettes de refroidissement à travers desquelles le courant d'air de refroidissement du moteur est guidé quand l'installation est en service.

8. L'installation selon l'une des revendications 6 ou 7, caractérisée en ce que le refroidisseur de la caisse pour le régulateur de vitesse est arrangé directement sur une roue de ventilateur reliée avec l'arbre menant du moteur de la pompe.

9. L'installation selon l'une des revendications 6 à 8, caractérisé en ce que la caisse pour le régulateur de vitesse en état assemblé est au moins protégée aux projections d'eau.

10. L'installation selon l'une des revendications 6 à 9, caractérisée en ce que la partie de puissance (3"') du régulateur de vitesse, ayant une haute perte de chaleur, est arrangée directement au refroidisseur et que l'électronique de commande, ayant une perte de chaleur seulement faible, est arrangée sur au moins une carte à circuits imprimés (3',3") dans la caisse, carte qui se trouve à une distance au refroidisseur.
